# FASCICULE DE BREVET EUROPEEN

(11) **EP 0 809 010 B1**
(45) Date de publication et mention de la délivrance du brevet: **20.08.2003**
(21) Numéro de dépôt: 97401124.9
(22) Date de dépôt: 22.05.1997
(51) Int. Cl.: F02K 1/68

(54) **Inverseur de pousée de turboréacteur à double flux à obstacles liés au capot primaire**
Schubumkehrvorrichtung für ein Zweikreistriebwerk mit Klappen am Triebwerksgehäuse
Double flux jet engine thrust reverser with blocker flaps connected to the engine cowling

(30) Priorité: 23.05.1996 FR 9606391
(43) Date de publication de la demande: 26.11.1997
(73) Titulaire: Hurel Hispano Le Havre, 76700 Harfleur (FR)
(72) Inventeur: Vauchel Guy, Bernard, 76610 - Le Havre (FR)
(74) Mandataire: Berrou, Paul

(56) Documents cités:
- FR-A- 2 650 861
- US-A- 3 280 561

## Description

La présente invention concerne un inverseur de poussée de turboréacteur à double flux.

Dans ce type de turboréacteur comprenant un canal primaire de circulation des gaz dits de flux chaud constituant une veine d'éjection et un canal annulaire, coaxial au canal primaire, où circulent des gaz dits de flux froid, à la sortie par exemple d'une soufflante située à l'entrée du turboréacteur, et constituant une veine secondaire d'éjection, particulièrement lorsque le taux de dilution est élevé, l'inversion de poussée met en oeuvre principalement ou uniquement la déviation du flux secondaire froid.

Il-est connu dans ces applications d'utiliser des éléments déplaçables ou obstacles susceptibles en position déployée de former un ensemble annulaire qui obture ledit canal secondaire de manière à dévier le flux secondaire, en procurant une inversion de poussée. Lors du fonctionnement en poussée directe, par contre, lesdits obstacles doivent être rétractés et escamotés pour dégager la circulation du flux secondaire dans le canal secondaire. Dans certains types connus d'inverseurs de poussée, lesdits obstacles sont ainsi escamotés dans la paroi radialement externe du canal secondaire.

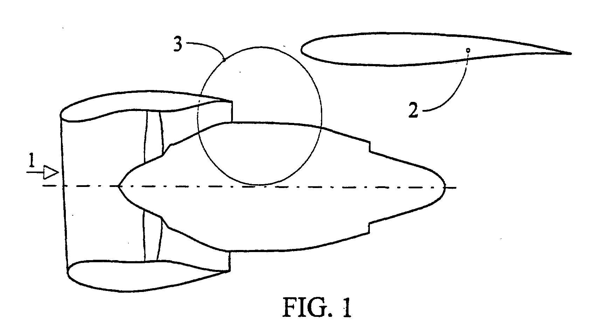

D'autres solutions, notamment applicables lorsque les taux de dilution sont élevés, et lorsque la paroi radialement externe du canal secondaire est plus courte que la paroi radialement interne dudit canal secondaire, prévoient d'escamoter lesdits obstacles au niveau de la paroi radialement interne du canal secondaire. Cette solution permet d'éviter d'augmenter l'encombrement (diamètre extérieur) du moteur, d'obtenir une efficacité assurant les performances requises d'inversion, d'assurer également, en fonctionnement de poussée directe, une paroi interne aérodynamiquement continue sans introduire de perturbations dommageables dans les écoulements tout en obtenant une masse réduite de l'ensemble et une simplicité facilitant la réalisation et la maintenance. La figure 1 montre un turboréacteur 1 monté sous l'aile 2 d'un avion avec la zone 3 d'installation de l'inverseur de poussée.

US-A-3 280 561 et FR-A-2 625 261 décrivent des solutions de ce type. Les éléments déplaçables ou obstacles sont dans ce cas montés sur la structure fixe entourant le corps central du moteur au moyen de pivots fixes. L'articulation de pivotement des obstacles peut être placée du côté aval mais dans ce cas, le déplacement de l'obstacle amène une position d'obstruction du canal secondaire gênante dans certains cas pour le fonctionnement du moteur. Dans le cas où l'articulation est placé du côté amont, la déviation du jet est obtenue par la face externe des obstacles, ce qui ne permet pas une optimisation de formes adaptée à la fois à la déviation et au jet direct.

Un inverseur de poussée de -turboréacteur à double flux conforme à l'invention et permettant d'obtenir les résultats rappelés ci-dessus sans encourir les inconvénients des solutions connues antérieures est caractérisé en ce que chaque élément déplaçable outre un panneau externe comprend un panneau interne disposé en jet direct en superposition sous ledit panneau externe et coulissant en prolongement du panneau externe de manière à assurer la déviation du flux inversé en position d'inversion de poussée.

D'autres caractéristiques et avantages de l'invention seront mieux compris à la lecture de la description qui va suivre d'un mode de réalisation de l'invention, en référence aux dessins annexés sur lesquels :
- la figure 1 précédemment décrite montre une vue générale schématique d'un turboréacteur à double flux sur lequel est installé l'inverseur de poussée conforme à l'invention ;
- la figure 2 représente selon une demi-vue schématique en section par un plan passant par l'axe longitudinal un inverseur de poussée conforme à l'invention dans une configuration de jet direct ;
- la figure 3 représente selon une demi-vue schématique analogue à celle de la figure 2 l'inverseur de poussée de la figure 2 dans une configuration d'inversion de poussée ;
- la figure 4 montre l'inverseur de poussée de la figure 3 selon une vue schématique en bout ;
- la figure 5 représente selon une demi-vue schématique analogue à celle des figures 2 et 3 une variante de réalisation de l'inverseur de poussée conforme à l'invention.

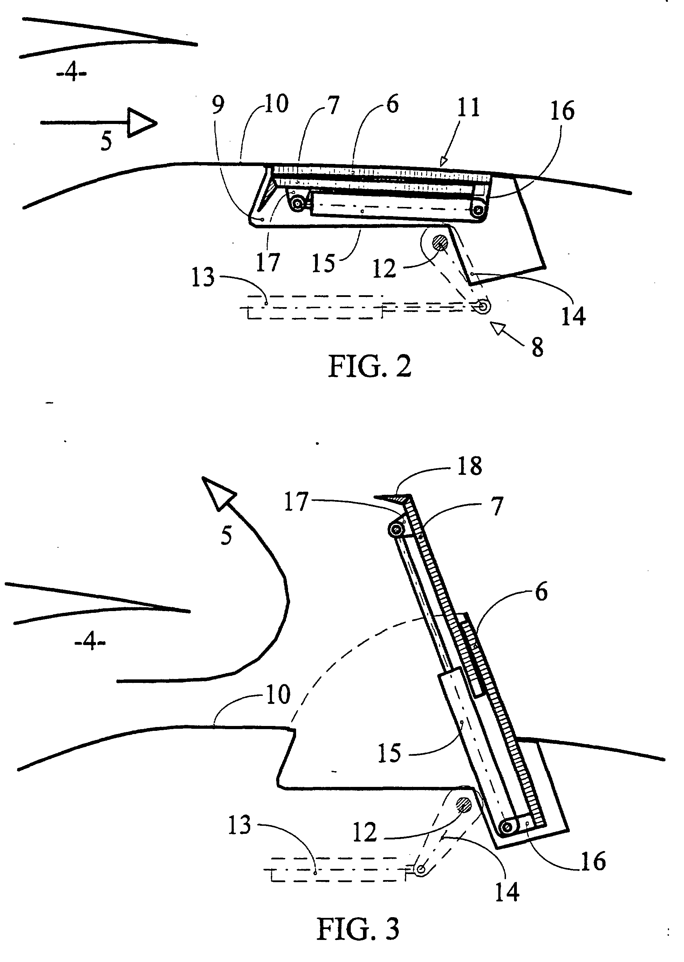

La figure 2 montre les détails de la zone 3 de la figure 1 d'installation d'un inverseur de poussée de turboréacteur à double flux. En aval d'un canal 4 d'éjection du flux secondaire symbolisé par la flèche 5, l'inverseur de poussée est constitué d'un ensemble de panneaux externes 6, d'un ensemble de panneaux internes 7 et d'un système de commande 8. Dans la configuration représentée sur la figure 2 correspondant au fonctionnement en poussée directe, lesdits constituants de l'inverseur de poussée sont disposés dans un logement 9 ménagé dans la structure fixe du capot primaire 10 du turboréacteur. Dans ladite position rétractée, la surface extérieure 11 du panneau externe 6 se raccorde et assure le profil aérodynamique du capot primaire 10 et le panneau interne 7 est disposé en superposition sous le panneau externe 6. Un système de verrouillage de définition connue en soi et non représenté en détails sur les dessins est adjoint aux panneaux. Lesdits panneaux externes 6 sont supportés par des axes pivots 12 solidaires de la structure fixe du capot primaire 10.

Dans l'exemple représenté sur les figures 2 et 3, le système de commande 8 est constitué pour chaque panneau externe pivotant 6 par un vérin 13 fixé sur la structure fixe et dont la tige est articulée sur un levier 14 solidaire dudit axe pivot 12. Un vérin de manoeuvre 15 est en outre disposé entre l'extrémité aval 16 du panneau externe 6 et l'extrémité amont 17 du panneau interne, des moyens de guidage et de coulissement étant disposés entre le panneau interne 7 et le panneau externe 6.

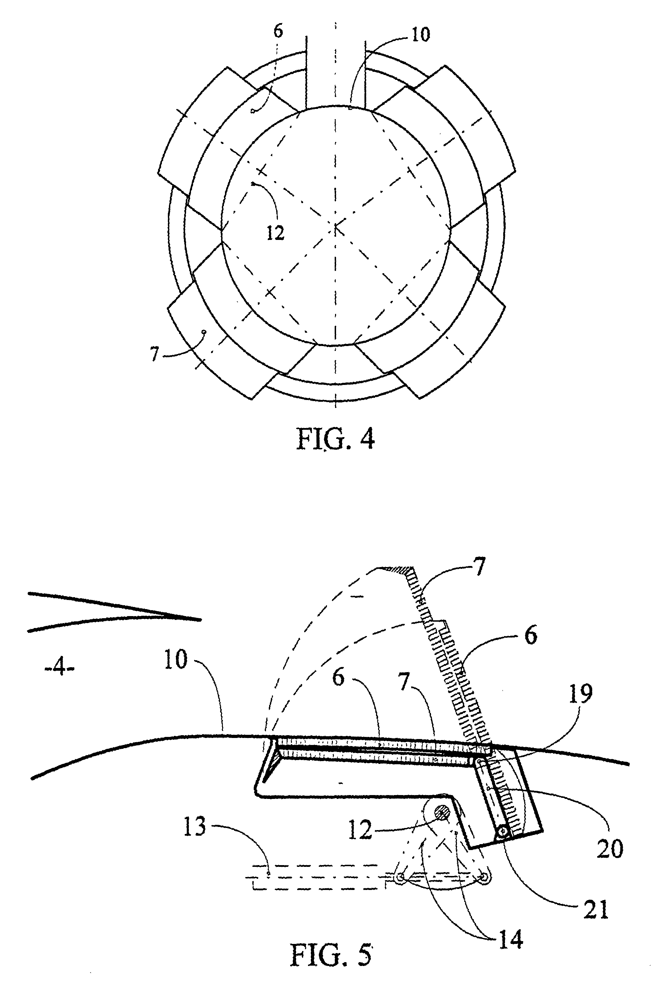

Il s'ensuit que pour passer de la configuration de l'inverseur de poussée en jet direct représentée sur la figure 2 à la configuration en jet inversé représentée sur les figures 3 et 4, le vérin 13 déplace le panneau externe pivotant 6 dans la position désirée jusqu'à la fin de course et ensuite le vérin de manoeuvre 15 déploie le panneau interne 7 jusqu'à la position optimale prévue pour assurer l'inversion du flux symbolisé par la flèche 5, le déplacement du panneau interne 7 se faisant par coulissement grâce à tout moyen connu en soi et non représenté en détails sur les dessins. Chaque panneau interne 7 peut en outre être équipé d'un déflecteur en forme de-becquet tel que 18 à son extrémité amont et/ou dans les zones latérales afin d'optimiser le pilotage du flux en jet inversé.

En fonction des applications, la manoeuvre de déploiement du panneau interne 7, soit se fait après la rotation complète du panneau externe pivotant 6, soit est pilotée spécifiquement par les éléments de commande pendant la manoeuvre du panneau externe 6.

Dans l'exemple représenté sur les dessins, les obstacles constitués par les panneaux externes 6 et internes 7 sont au nombre de quatre mais ce nombre peut varier en fonction des applications particulières sur avion. En variante de réalisation, le vérin 13 peut être installé en aval de l'axe pivot 12 et dans ce cas le vérin est poussant lors du déploiement des panneaux mobiles. La commande de déplacement des panneaux de l'inverseur de poussée par pivotement peut par ailleurs être obtenue par tout moyen tel qu'un vérin relié au panneau interne 7 ou au panneau externe 6. En outre, le vérin de manoeuvre 15 peut être fixé à son extrémité aval à la structure fixe de capot primaire 10, en utilisant une cinématique compatible avec la manoeuvre d'entrainement souhaitée et notamment en alignant le point d'accrochage dudit vérin 15 avec le pivot 12 du panneau externe pivotant 6.

La réalisation conforme à l'invention d'un inverseur de poussée présente de nombreux avantages parmi lesquels on relève :
- le mode d'installation est particulièrement avantageux dans le cas d'une tuyère externe courte où un inverseur de poussée à grilles ou à portes entraîne de sérieuses difficultés d'installation mais il reste applicable dès que les lignes externes de nacelle sont suffisamment courtes pour permettre son installation ;
- les panneaux déplaçables de l'inverseur sont situés en dehors de la tuyère et ne nécessitent pas de traitement acoustique particulier ;
- une optimisation du pilotage du flux en jet inversé peut être obtenue par l'adaptation des déflecteurs 18 en becquet et en modifiant la longueur de sortie des panneaux internes 7;
- en outre, la face interne du panneau interne coulissant 7 comporte un profil adapté et peut intégrer un ou plusieurs éléments de guidage du flux pour atteindre les performances aérodynamiques d'inversion recherchées ;
- lors du passage de la position de jet direct à la position de jet inversé les éventuelles contraintes liées au passage du flux sont respectées ;
- la réduction des efforts exercés par le flux sur le panneau externe en cours d'ouverture du fait de sa surface réduite permet d'alléger le système de commande.

Dans le cas où le passage du flux au cours des positions transitoires lors du déploiement ne présente pas de difficulté, une variante de réalisation représentée sur la figure 5 peut être appliquée. On retrouve comme précédemment décrit en références aux figures 2 et 3, un inverseur de poussée constitué de panneaux externes pivotants 6, de panneaux internes 7 et de vérins de commande 13 actionnant par l'intermédiaire de bielles 14 des axes pivots 12 des panneaux externes 6. Dans cette réalisation par contre, l'extrémité aval 19 du panneau interne 7 est relié par une bielle 20 à un point 21 de la structure fixe de capot primaire 10 situé en aval de l'axe pivot 12. Il s'ensuit que lors du passage à la configuration de jet inversé, le coulissement du panneau interne 7 par rapport au panneau externe 6 commence dès le début du pivotement du panneau externe 6 et la course des deux panneaux se termine en même temps.

Selon une variante de réalisation, la manoeuvre du panneau interne 7 peut par ailleurs être associée à un système de bielles raccordées au panneau externe 6, lui permettant la même fonction de déploiement, non linéaire, synchronisée ou non.

## Revendications

1. Inverseur de poussée de turboréacteur à double flux comportant des éléments déplaçables (6, 7) , en position déployée, constituant des obstacles (6, 7) formant un ensemble annulaire de déviation du flux secondaire procurant une inversion de poussée et en position rétractée, correspondant à un fonctionnement en poussée directe du turboréacteur, s'intégrant dans la paroi de capot primaire (10) du turboréacteur, en aval du canal annulaire (4) d'éjection dudit flux secondaire, chaque élément déplaçable (6, 7) étant associé à au moins un vérin (13) de commande des déplacements fixé de manière articulée sur la structure fixe de capot primaire (10), chaque élément déplaçable étant supporté par des axes pivot (12) solidaires de ladite structure fixe, chaque élément déplaçable comportant un panneau externe pivotant (6) dont la surface externe en poussée directe assure le profil aérodynamique du capot primaire (10) du turboréacteur **caractérisé en ce que** chaque élément déplaçable comprend en outre un panneau interne (7) disposé en jet direct en superposition sous ledit panneau externe (6) et coulissant en prolongement du panneau externe (6) de manière à assurer la déviation du flux inversé en position d'inversion de poussée.

2. Inverseur de poussée de turboréacteur à double flux selon la revendication 1 dans lequel au moins un vérin de manoeuvre (15) est disposé entre le bord aval (16) du panneau externe pivotant (6) et le bord amont (17) du panneau interne coulissant (7) de manière que lors du passage à la position d'inversion de poussée, le panneau externe (6) pivote sous l'action du vérin de commande (13) et le panneau interne (7) prend sa position déployée par coulissement sous l'action dudit vérin de manoeuvre (15).

3. Inverseur de poussée de turboréacteur à double flux selon la revendication 1 dans lequel le bord aval (19) du panneau interne (7) est relié par au moins une bielle (20) à la structure fixe de capot primaire (10) du turboréacteur de manière que lors du passage à la position d'inversion de poussée, le coulissement du panneau interne (7) s'effectue durant le pivotement du panneau externe (6).

4. Inverseur de poussée de turboréacteur à double flux selon l'une quelconque des revendications 1 à 3 dans lequel ledit panneau interne (7) est muni à son extrémité amont d'au moins un déflecteur en forme de becquet (18).

## Patentansprüche

1. Schubumkehrvorrichtung für Zweikreis-TL-Triebwerke, die bewegbare Elemente (6, 7) aufweisen, die in ausgeklappter Stellung Hindernisse (6, 7) bilden, die ein ringförmiges Umlenksystem für den Mantelstrom bilden und damit eine Schubumkehr erzeugen, und die sich in eingefahrener Stellung, die dem Direktstrahlbetrieb des Turbotriebwerks entspricht, in die Wand der Haupthaube (10) des Turbotriebwerks hinter dem Ringkanal (4) für den Ausstoß dieses Mantelstroms einfügen, wobei jedes bewegbare Element (6, 7) wenigstens einem Bewegungssteuerzylinder (13), der an dem festen Aufbau der Haupthaube (10) angelenkt ist, zugeordnet ist, jedes bewegbare Element von Drehachsen (12) gehalten wird, die mit diesem festen Aufbau fest verbunden sind, und jedes bewegbare Element eine schwenkbare Außenplatte (6) aufweist, deren Außenfläche im Direktstrahlbetrieb das aerodynamische Profil der Haupthaube (10) des Turbotriebwerks gewährleistet,
**dadurch gekennzeichnet,**
**dass** jedes bewegbare Element ferner eine Innenplatte (7) aufweist, die im Direktstrahlbetrieb direkt unter der Außenplatte (6) angeordnet ist und in Verlängerung der Außenplatte (6) dergestalt gleiten kann, dass im Schubumkehrstellung die Umlenkung des Umkehrstroms gewährleistet ist.

2. Schubumkehrvorrichtung für Zweikreis-TL-Triebwerke nach Anspruch 1, bei der mindestens ein Steuerzylinder (15) zwischen der Hinterkante (16) der schwenkbaren Außenplatte (6) und der Vorderkante (17) der gleitenden Innenplatte (7) angeordnet ist, so dass die Außenplatte (6) beim Übergang in die Schubumkehrstellung unter der Einwirkung des Steuerzylinders (13) schwenkt und die Innenplatte (7) ihre ausgeklappte Stellung einnimmt, indem sie unter der Einwirkung des Steuerzylinders (15) gleitet.

3. Schubumkehrvorrichtung für Zweikreis-TL-Triebwerke nach Anspruch 1, bei der die Hinterkante (19) der Innenplatte (7) durch mindestens eine Stange (20) mit dem festen Aufbau der Haupthaube (10) des Turbotriebwerks dergestalt verbunden ist, dass das Gleiten der Innenplatte (7) beim Übergang in die Schubumkehrstellung während der Schwenkbewegung der Außenplatte (6) erfolgt.

4. Schubumkehrvorrichtung für Zweikreis-TL-Triebwerke nach einem der Ansprüche 1 bis 3, bei der die Innenplatte (7) an ihrem vorderen Ende mit mindestens einem spoilerförmigen Deflektor (18) versehen ist.

## Claims

1. Bypass turbojet thrust reverser comprising moveable elements (6, 7), in a deployed position, constituting obstacles (6, 7) forming an annular assembly deflecting the fan flow causing thrust reversal and, in a retracted position, corresponding to direct thrust mode of the turbojet, incorporating themselves into the wall of the main cowling (10) of the turbojet, downstream of the annular duct (4) through which said fan flow is ejected, each moveable element (6, 7) being associated with at least one motion-control ram (13) fixed in an articulated manner to the fixed structure of the primary cowling (10), each moveable element being supported by pivot pins (12) secured to the said fixed structure, each moveable element comprising a pivoting outer panel (6) of which the external surface, in direct thrust mode, provides the aerodynamic profile for the main cowling (10) of the turbojet, **characterized in that** each moveable element further comprises an internal panel (7) arranged, in direct jet mode, in superposition under the said external panel (6) and sliding in the continuation of the external panel (6) in such a way as to deflect the reversed flow in the thrust reversal position.

2. Bypass turbojet thrust reverser according to Claim 1, in which at least one operating ram (15) is arranged between the downstream edge (16) of the pivoting external panel (6) and the upstream edge (17) of the sliding internal panel (7), so that upon changing to the thrust reversal position, the external panel (6) pivots under the action of the control ram (13) and the internal panel (7) adopts its deployed position by sliding under the action of the said operating ram (15).

3. Bypass turbojet thrust reverser according to Claim 1, in which the downstream edge (19) of the internal panel (7) is connected by at least one link rod (20) to the fixed structure of the main cowling (10) of the turbojet in such a way that upon changing to the thrust reversal position, the sliding of the internal panel (7) takes place while the external panel (6) is pivoting.

4. Bypass turbojet thrust reverser according any one of Claims 1 to 3, in which the said internal panel (7) is equipped at its front end with at least one deflector in the form of a spoiler (18).
